# EUROPÄISCHE PATENTANMELDUNG

(11) **EP 1 103 730 A2**
(43) Veröffentlichungstag der Anmeldung: **30.05.2001**
(21) Anmeldenummer: 00124673.5
(22) Anmeldetag: 11.11.2000
(51) Int. Cl.: F16B 5/02

(54) **Schraubverbindung**

(30) Priorität: 25.11.1999 DE 29920683 U
(71) Anmelder: Balcke-Dürr Energietechnik GmbH, 46049 Oberhausen (DE)
(72) Erfinder: Zimmermann, Peter, Dipl.Ing., 45149 Essen (DE)
(74) Vertreter: Stenger, Watzke & Ring Patentanwälte

(57) **Zusammenfassung**

Vorgeschlagen wird eine Schraubverbindung für Bauteile aus kerbempfindlichem Material, insbesondere für dünnwandige Platten und Profile aus pultrudierten glasfaserverstärkten Kunststoffen. Die Schraubverbindung besteht aus einem Schraubenbolzen (1) mit einem zumindest auf einen Teil seiner Länge mit einem Gewinde (1c) versehenen Schaft (1b), einer auf das Gewinde (1c) aufschraubbaren Mutter (2) und jeweils mindestens einer zwischen dem Kopf (1a) des Schraubenbolzens (1) sowie einer zwischen der Mutter (2) und dem jeweils angrenzenden Bauteil angeordneten Unterlegscheibe. Um bei unterschiedlichen Verbindungstypen eine Vielzahl von Schraubenlängen oder Unterfütterungen zu vermeiden, ist mindestens eine der Unterlegscheiben als Kragen (3a) einer den Schraubenschaft (1b) umgebenden Hülse (3) ausgebildet. Die axiale Länge der Hülse entspricht maximal der Summe der Wandstärken aller unmittelbar miteinander zu verbindenden Bauteile und minimal der axialen Erstreckung des innerhalb der Lochlaibungen der unmittelbar miteinander zu verbindenden Bauteile endenden Gewindeabschnittes (1c).

## Beschreibung

Die Erfindung betrifft eine Schraubverbindung für Bauteile aus kerbempfindlichem Material, insbesondere für dünnwandige Platten und Profile aus pultrudierten glasfaserverstärkten Kunststoffen. Derartige Schraubverbindungen bestehen aus einem Schraubenbolzen mit einem zumindest auf einem Teil seiner Länge mit Gewinde versehenen Schaft, einer auf das Gewinde aufschraubbaren Mutter und jeweils mindestens einer zwischen dem Kopf der Schraube sowie einer zwischen der Mutter und dem jeweils angrenzenden Bauteil angeordneten Unterlegscheibe.

Bei der Verbindung von dünnwandigen Platten und Profilen aus pultrudierten glasfaserverstärkten Kunststoffen, wie sie beispielsweise zur Herstellung von Kühltürmen verwendet werden, übertragen derartige Schraubverbindungen sowohl Zug- als auch Druckkräfte. Infolge der dünnen Wandstärken stehen nur relativ kleine Flächen zur Übertragung der Lochlaibungskräfte zur Verfügung. Infolge der Kerbempfindlichkeit des Materials sind Gewindegänge innerhalb der Lochlaibung der zu verbindenden Bauteile zu vermeiden, da durch das Gewinde Spannungsspitzen entstehen, so daß die Platten und Profile beschädigt werden können. Um diese Gefahr zu vermeiden, wird bei den bekannten Schraubverbindungen dafür gesorgt, daß stets Schraubenbolzen verwendet werden, deren Gewindeabschnitt ausschließlich außerhalb der Lochlaibungen der miteinander zu verbindenden Bauteile liegt. Sofern keine dementsprechenden Schraubenbolzen zur Verfügung stehen, wird durch längere Schraubenbolzen und Unterlegscheiben dafür gesorgt, daß innerhalb der Lochlaibungen keine Gewindeabschnitte verlaufen.

Bei der Herstellung von Fiberglas-Kühltürmen kommen auf diese Weise viele unterschiedliche Verbindungstypen zustande, die eine Vielzahl von unterschiedlichen Schraubenlängen oder Unterfütterungen erfordern. Hierdurch ergibt sich nicht nur die Notwendigkeit einer aufwendigen und umfangreichen Lagerhaltung, sondern auch einer sehr sorgfältigen Montage.

Der Erfindung liegt die **Aufgabe** zugrunde, eine Schraubverbindung der eingangs beschriebenen Art zu schaffen, die auf konstruktiv einfache und preiswerte Art das voranstehend beschriebene Problem vermeidet.

Die **Lösung** dieser Aufgabenstellung durch die Erfindung ist dadurch gekennzeichnet, daß mindestens eine der Unterlegscheiben als Kragen einer den Schraubenschaft umgebenden Hülse ausgebildet ist, deren axiale Länge maximal der Summe der Wandstärken aller unmittelbar miteinander zu verbindenden Bauteile und minimal der axialen Erstreckung des innerhalb der Lochlaibungen der unmittelbar miteinander zu verbindenden Bauteile endenden Gewindeabschnittes entspricht.

Durch die erfindungsgemäße Kragenhülse wird auf einfache Weise die Gefahr beseitigt, daß das kerbempfindliche Material der mittels der Schraubverbindung zu verbindenden dünnwandigen Platten und Profile im Bereich der Lochlaibungen beschädigt wird.

Zwischen dem Kragen der Hülse und dem benachbarten Bauteil bzw. zwischen dem Kragen der Hülse und dem Schraubenkopf und/oder der Mutter kann bei Bedarf eine weitere Unterlegscheibe angeordnet werden.

Bei einer weiteren Ausführungsform der Erfindung kann der Kragen durch eine Mehrzahl von radial von der Hülse abstehenden Lappen gebildet werden, so daß sich eine Kragenhülse auf einfache Weise durch Bearbeiten eines rohrförmigen Ausgangsproduktes herstellen läßt.

Auf der Zeichnung sind mehrere Ausführungsbeispiele einer Schraubverbindung und zwei Ausführungsformen der hierbei verwendeten Kragenhülse dargestellt, und zwar zeigen:
- Fig. 1: einen Längsschnitt durch ein erstes Ausführungsbeispiel einer Schraubverbindung,
- Fign. 2a, 2b: einen der Fig. 1 entsprechenden Längsschnitt durch ein zweites und drittes Ausführungsbeispiel,
- Fig. 3: einen Schnitt durch ein drittes Ausführungsbeispiel einer Schraubverbindung, mit der rohrförmige Bauteile miteinander und mit anderen Teilen verbunden werden,
- Fig. 4: einen Längsschnitt durch eine als Klemmverbindung ausgeführte Schraubverbindung,
- Fig. 5: einen Längsschnitt und eine Draufsicht zu einer ersten Ausführungsform der Kragenhülse,
- Fig. 6: einen Längsschnitt und eine Draufsicht zu einer zweiten Ausführungsform der Kragenhülse.

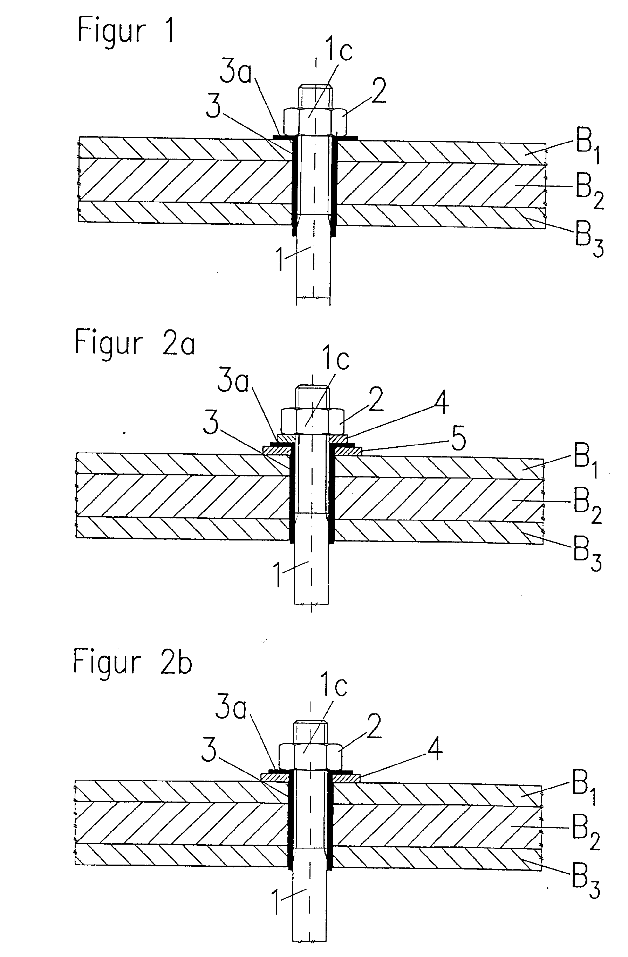

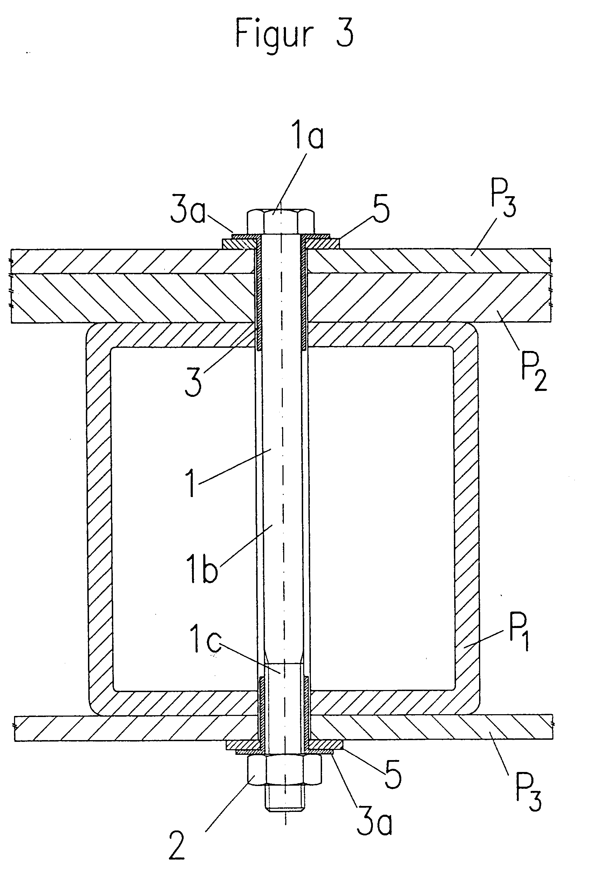

Mit der anhand der Ausführungsbeispiele in den Figuren 1 bis 3 dargestellten Schraubverbindung werden Bauteile aus kerbempfindlichem Material miteinander verbunden, beispielsweise dünnwandige Platten oder Profile aus pultrudierten glasfaserverstärkten Kunststoffen. In den Figuren 1 bis 2b und 4 sind plattenförmige Bauteile B1, B2 und B3 dargestellt, in Figur 3 rohrförmige Bauteile oder Profile P1, P2 und P3.

Jede Schraubverbindung umfaßt einen Schraubenbolzen 1 mit einem Schraubenkopf 1a und einem Schaft 1b, der zumindest auf einem Teil seiner Länge Gewinde 1c aufweist, auf das eine Mutter 2 aufschraubbar ist.

Um im Bereich der Lochlaibungen der Bauteile B1 bis B3 bzw. Profile P1 bis P3 Beschädigungen des kerbempfindlichen Materials zu vermeiden, ist zumindest im Bereich des Gewindes 1c eine aus kerbunempfindlichem Material bestehende Hülse 3 eingesetzt, die an ihrem einen Ende mit einem als Unterlegscheibe dienenden Kragen 3a versehen ist. Wie die Darstellungen erkennen lassen, entspricht die Axiallänge der Hülse 3 maximal der Summe der Wandstärken aller unmittelbar miteinander zu verbindenden Bauteile B1 bis B3 bzw. P1 bis P3 und minimal der axialen Erstreckung des innerhalb der Lochlaibungen der unmittelbar miteinander zu verbindenden Bauteile endenden Gewindeabschnittes 1c. Auf diese Weise wird sichergestellt, daß die Spitzen des Gewindes 1c die miteinander zu verbindenden Bauteile B1 bis B3 bzw. P1 bis P3 im Bereich ihrer Lochlaibungen nicht beschädigen können.

Bei der einfachsten Ausführungsform nach Figur 1 dient der Kragen 3a der Hülse 3 als einzige Unterlegscheibe zwischen Mutter 2 und benachbartem Bauteil B1. Gemäß Figur 2a, 2b kann zwischen dem Kragen 3a der Hülse 3 und der Mutter 2 sowie zwischen dem Kragen 3a der Hülse 3 und dem benachbarten Bauteil B1 jeweils eine Unterlegscheibe 4 bzw. 5 angeordnet sein.

Wenn gemäß Figur 3 durch die Schraubverbindung Profile P1, P2 und P3, beispielsweise Hohlprofile mit Flachprofilen verbunden werden, kann der Schraubenbolzen 1 zur Verbindung dieser Bauteile an gegenüberliegenden Stellen verwendet werden. In diesem Fall ist es zweckmäßig, nicht nur im Bereich der Mutter 2, sondern auch im Bereich des Schraubenkopfes 1a in den Lochlaibungen der Profile P1, P2 und P3 Hülsen 3 anzuordnen, deren Kragen 3a jeweils an der Unterseite des Schraubenkopfes 1a bzw. der Mutter 2 anliegt. Beim dargestellten Ausführungsbeispiel ist zwischen dem Kragen 3a jeder Hülse 3 und dem benachbarten Profil P3 jeweils eine zusätzliche Unterlegscheibe 5 angeordnet.

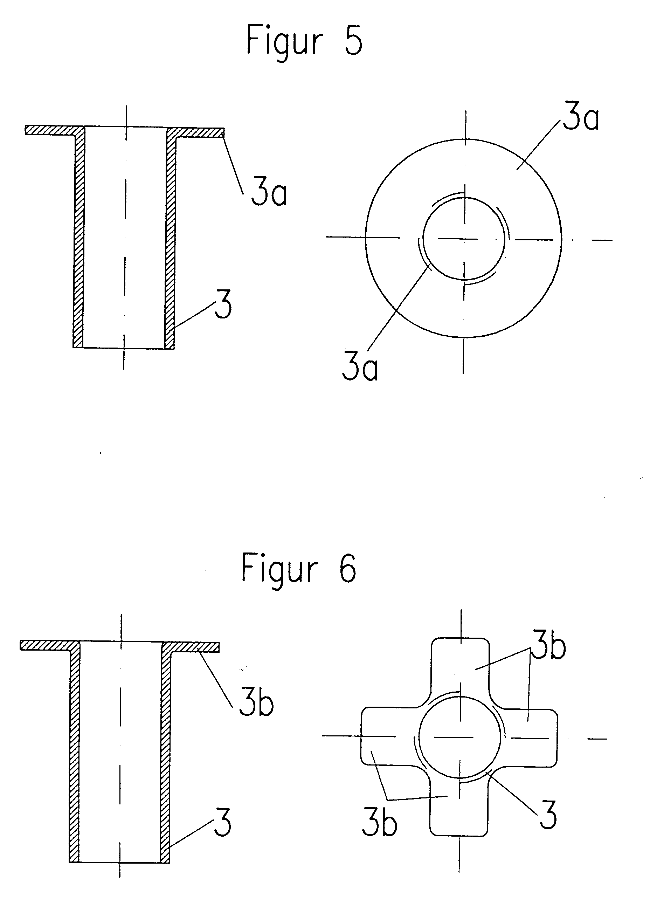

Während in Figur 5 eine Hülse 3 dargestellt ist, deren Kragen 3a als Kreisring an ein Ende der Hülse 3 angeformt ist, zeigt die Figur 6 eine Kragenhülse, deren Kragen 3a durch Auftrennen und Umbördeln eines rohrförmigen Ausgangsproduktes hergestellt wurde. In diesem Fall wird der Kragen 3a durch vier radial und rechtwinklig von der rohrförmigen Hülse 3 abstehende Lappen 3b gebildet, wie die Draufsicht zeigt.

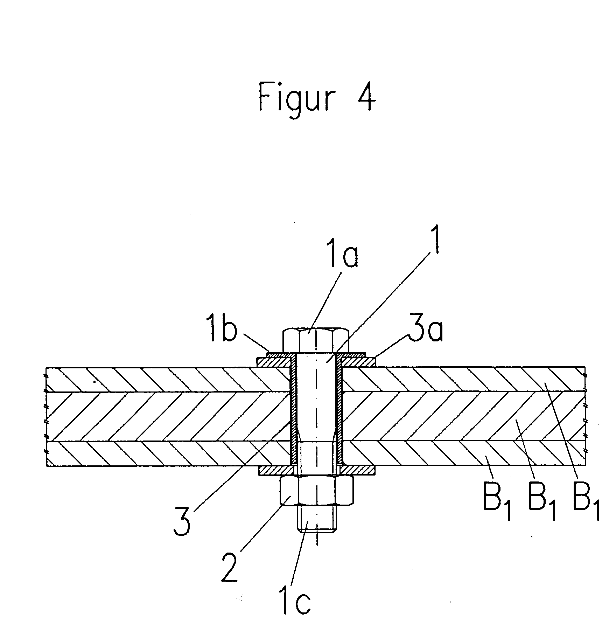

Wenn gemäß Fig. 4 die Bauteile B1 bis B3 kraftschlüssig durch Schraubenbolzen verbunden werden, muß die Hülse 3 so bemessen sein, daß die Klemmwirkung der Verbindung gewährleistet ist.

### Bezugszeichenliste

- 1: Schraubenbolzen
- 1a: Schraubenkopf
- 1b: Schaft
- 1c: Gewinde
- 2: Mutter
- 3: Hülse
- 3a: Kragen
- 3b: Lappen
- 4: Unterlegscheibe
- 5: Unterlegscheibe
- B1: Bauteil
- B2: Bauteil
- B3: Bauteil
- P1: Profil
- P2: Profil
- P3: Profil

## Patentansprüche

1. Schraubverbindung für Bauteile aus kerbempfindlichem Material, insbesondere für dünnwandige Platten und Profile aus pultrudierten glasfaserverstärkten Kunststoffen, bestehend aus einem Schraubenbolzen (1) mit einem zumindest auf einem Teil seiner Länge mit Gewinde (1c) versehenen Schaft (1b), einer auf das Gewinde (1c) aufschraubbaren Mutter (2) und jeweils mindestens einer zwischen dem Kopf (1a) des Schraubenbolzens (1) sowie einer zwischen der Mutter (2) und dem jeweils angrenzenden Bauteil angeordneten Unterlegscheibe,
**dadurch gekennzeichnet,**
daß mindestens eine der Unterlegscheiben als Kragen (3a) einer den Schraubenschaft (1b) umgebenden Hülse (3) ausgebildet ist, deren axiale Länge maximal der Summe der Wandstärken aller unmittelbar miteinander zu verbindenden Bauteile (B1 bis B3; P1 bis P3) und minimal der axialen Erstreckung des innerhalb der Lochlaibungen der unmittelbar miteinander zu verbindenden Bauteile endenden Gewindeabschnittes (1c) entspricht.

2. Schraubverbindung nach Anspruch 1, dadurch gekennzeichnet, daß zwischen dem Kragen (3a) der Hülse (3) und dem benachbarten Bauteil (B1 bzw. P3) eine weitere Unterlegscheibe (5) angeordnet ist.

3. Schraubverbindung nach Anspruch 1 oder 2, dadurch gekennzeichnet, daß zwischen dem Kragen (3a) der Hülse (3) und dem Schraubenkopf (1a) und/oder der Mutter (2) eine weitere Unterlegscheibe (4, 5) angeordnet ist.

4. Schraubverbindung nach einem der Ansprüche 1 bis 3, dadurch gekennzeichnet, daß der Kragen (3a) durch eine Mehrzahl von radial von der Hülse (3) abstehenden Lappen (3b) gebildet ist.

5. Schraubverbindung nach einem der Ansprüche 1 bis 4, dadurch gekennzeichnet, daß die Hülse (3) aus kerbunempfindlichem Material besteht.
